# EUROPEAN PATENT APPLICATION

(11) **EP 0 724 371 A1**
(43) Date of publication of application: **31.07.1996**
(21) Application number: 95300568.3
(22) Date of filing: 30.01.1995
(51) Int. Cl.: H04Q 7/24

(54) **Wireless communication terminal**

(71) Applicant: CABLE & WIRELESS PLC, London WC1X 8RX (GB)
(72) Inventor: Lorimer, Wilson Andrew, London W4 4BZ (GB)
(74) Representative: Skone James, Robert Edmund

(57) **Abstract**

A method of operating a wireless communication terminal (1) comprising identifying a preferable one of at least two wireless networks (6,7,8) for establishing an outgoing call on the basis of an algorithm involving at least one parameter related to the networks.

The terminal may be a mobile telephone handset, or a PC with radio communication capabilities for transmitting data. The algorithm typically identifies the cheapest available network for the outgoing call on the basis of current network tariff information.

## Description

The present invention relates to a wireless communication terminal.

Conventional wireless terminals, e.g. mobile phones, are only able to attach to a single wireless network environment.

According to the present invention, we provide a wireless communication terminal comprising connection means capable of establishing an outgoing call with at least two wireless networks, the terminal further comprising automatic selection means adapted to identify a preferable one of the at least two networks for carrying the outgoing call, the network being identified on the basis of an algorithm involving at least one parameter relating to the networks.

According to a second aspect of the present invention we provide a method of operating a wireless communication terminal comprising identifying a preferable one of at least two wireless networks for establishing an outgoing call on the basis of an algorithm involving at least one parameter related to the networks.

The outgoing call may be a normal telephone conversation transmitted via a radio telephony network, or may transmit computer data via a radio data network.

The wireless communication terminal may comprise a wireless telephone handset with its own onboard radio communication capabilities and an onboard processor (the automatic network selection means) adapted to automatically identify the preferred network.

Alternatively the terminal may comprise a Personal Computer (PC) with a PCMCIA card and associated antenna or an in-vehicle terminal with the power and radio capabilities being provided by the vehicle. In the case of the in-vehicle terminal the automatic network selection means may be part of a telephone handset, or may be part of a separate intelligent device in the vehicle attached to the telephone handset and the radio apparatus.

Typically the parameter comprises tariff information for each network. In a preferable example, when the handset is requested to make an outgoing call, it looks up current tariff information on each network stored on an onboard memory device and selects the cheapest available network based on the time of day and call destination.

The handset typically further comprises means for automatically establishing an outgoing call on the identified network. The handset may also set up the call on an alternative network selected in accordance with "user preference" or "user override" options.

Examples of wireless telephony networks with which the present invention is able to operate include DECT, DCS 1800 or GSM.

An embodiment of the invention will now be described with reference to the accompanying Figures in which:-
Figure 1 comprises a schematic diagram of the handset and associated network architecture; and,
Figure 2 comprises a flow diagram of the "outgoing call" mode.

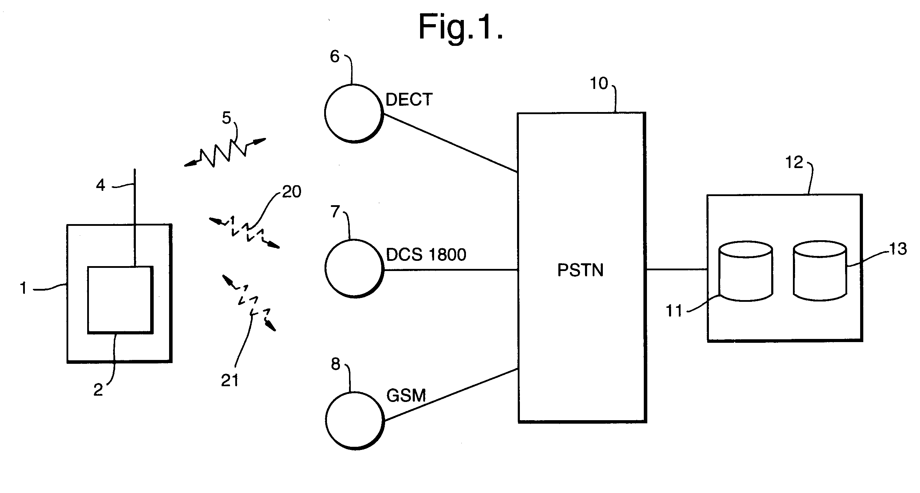

An embodiment of the invention is illustrated in Figure 1. Handset 1 comprises a high performance, low power consumption on-board RISC processor 2. The microprocessor 2 handles the majority of transaction, control and DSP functions and therefore removes the requirement for dedicated digital chip sets. Codec algorithms are swopped into memory from ROM to enable the codec operation for basic telephony services. The following real time conversational speech codecs are available to, and supported by the microprocessor 2;
1) ADCPM (in a DECT or PHS environment);
2) RPE-LPC (half and full rate) for GSM networks;
3) VSELP (full rate) for PDC networks;
4) PSI-CELP (half rate) for PDC networks; and,
5) LD-CELP for GSM networks.

Antenna 4 establishes communication with base stations of the various wireless networks which the handset is adapted to communicate with, under the control of the microprocessor 2. Items 6,7 and 8 are each base stations associated with a particular wireless telephony network environment. In the present example, base station 6 is associated with a DECT network, base station 7 is associated with a DCS 1800 network, and base station 8 is associated with a GSM network. Each base station is connected to other network points (not shown - such as base station controllers) in their respective network environment, as well as to the PSTN 10 (typically via a Gateway Mobile Switching Centre - not shown). Attached to the PSTN is a central store 11 for wireless network tariff information. This is typically contained in a central server environment 12.

### Idle Mode

The handset 1 adopts an "idle mode" when it is not engaged in a call or attempting to make or receive a call. When in idle mode (shown in Figure 1) the handset attaches to one network (in this case the DECT network 6) as indicated by the line 5 and maintains awareness of the availability of the other networks (as indicated by the dotted lines 20,21).

Network "attachment" can be defined as fully compliant registration and handshaking with a given network by a handset. Following signal level measurement, cell selection, and registration the handset monitors the respective paging and broadcast channels on the attached network. The handset is able to originate (MO) and terminate (MT) calls on the attached network.

The standard process for a handset to register with any wireless network base station involves a complex process of monitoring and addressing the RF channels for the given network. The first stage involves the cyclical sampling of all channels within the given network's frequency allocation (ranging from 10 to 100+) to determine the receiver signal quality. The handset then ranks these channels according to their receiver signal quality, then systematically tunes to the highest ranking channels, in descending order, until it locates an available channel on which registration would be possible.

Network "awareness" can be defined as the acknowledgement of the presence of the RF channels of a given network, over a sufficiently long and contiguous period eg. 30 seconds, to be confident of initiating registration with a local base station if required. The handset periodically performs signal level measurements and cell selection, without initiating full network registration.

The handset synchronises to available networks to receive the applicable broadcast information regarding network identity, access availability and any other relevant broadcast information (e.g. frequencies in use by neighbouring cells). The handset does not register its presence with these other networks and will not monitor their paging channels for mobile telephone call offers. Maintaining awareness of other available networks requires the handset to interrupt monitoring of the control and paging channels of the attached network.

The handset will have been pre-programmed with a defined set of network priorities. These will dictate to the handset the order in which the handset searches for wireless networks, i.e. the handset attaches preferentially to the primary network. These network priorities will be imposed by the service provider.

In Europe the primary network is typically DECT, the secondary network is typically DCS-1800 and the tertiary network 8 is typically GSM. The network priorities may vary depending upon the area of use as follows:

**TABLE 1**

| **Priority** | **Europe** | **North America** | **Hong Kong** | **Japan** |
|---|---|---|---|---|
| Primary | DECT | PCS1900 | PHS | PHS |
| Secondary | DCS | PCS1900 | GSM | PDC |
| Tertiary | GSM | | | |

When the handset goes out of range of the primary network, the handset attempts to attach to the secondary network if available or the tertiary network if the secondary network is not available.

When the handset comes within range of a network which has a higher priority than the currently attached network, and the new network remains available for a specified period (for instance 60 seconds), the handset leaves the currently attached network and attempts to attach to the preferable network.

The handset user has the prerogative and ability to alter these priorities as a result of his/her preferences.

### Outgoing Call Mode

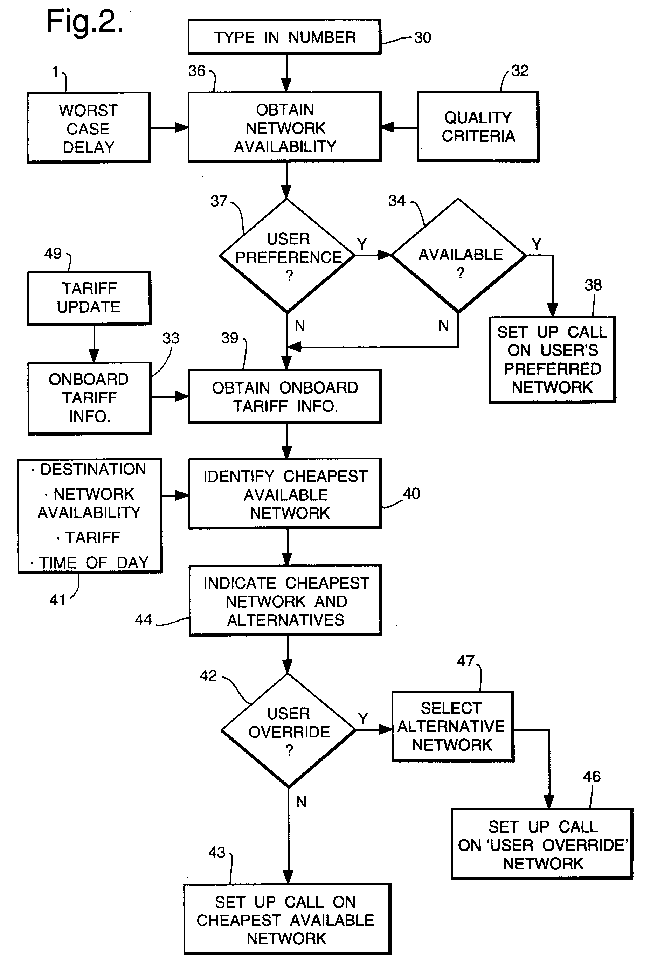

When the handset is to establish a call, it enters an "outgoing call" mode illustrated in the form of a flow chart shown in Figure 2.

The user types in the required destination number 30. Alternatively the user may enter a name/address/company name etc. and the handset looks up the corresponding destination number in a look-up table. The handset then determines which of the networks are available at 36. This is determined in accordance with a set of quality criteria 32, for instance the consistency of signal strength over the previous 60 seconds.

The user may have a preferred network, for instance if he requires a minimum speech quality which is only available on that network (regardless of the fact that it may be more expensive). If the user has a preferred network, then he can store this as a "user preference" in the handset. At 37 the handset determines whether a "user preference" has been programmed. If so, at 34 the handset determines whether the preferred network is available, and if so sets up a call on the preferred network at 38.

If no user preference is programmed then the handset proceeds to obtain onboard tariff information related to the available networks.

For the purposes of onboard, automatic network selection the handset hosts the current tariff ratings (indicated at 33) for all the wireless networks supported by it. The onboard tariff information is updated 49 as described below.

These tariff tables are periodically updated to reflect changing tariff rates specific to either a network or an individual user. It is possible that this tariff data will be stored within a SIM card/chip to allow portability of possible tariffs that are personalised for a given user.

The method used to update the tariff data takes advantage of the Short Message Services (SMS) of GSM and DCS, and the Connection Oriented Message Service (COMS - Radiopaging, Type C) service within DECT. These low throughput, out-of-band services allow small datasets (eg new tariff tables) to be adequately transferred from the central repository or database 11 to the handset, without any call disruption or call cost to the user. These published services are message oriented, bi-directional, acknowledged, with payloads up to 160 bytes.

The handset tariff tables will be monitored and maintained by the central server 12 that hosts both the tariff details and the individual user profiles 13.

When a handset registers on any wireless network it will initiate an update to the user profile data, resident on the server, to indicate its present location. This will be achieved using MO (Mobile Originated) SMS or COMS facilities available to the respective network.

When a change occurs to the tariff ratings which modifies the tables, the central server 12 determines from the user profile data which handsets require updating. Profile records associated with these handsets will be appropriately flagged, and at the next registration indication a download of the amended tariff information is initiated using the respective SMS or COMS facilities for the network to which the handsets are attached.

The handset then performs automatic network selection by identifying the cheapest available network (the "ANS selection") for the current time of day at 40. As indicated at 41, the parameters in this decision are the call destination, network availability and tariff for each available network for the particular time of day.

Once the ANS selection has been identified at 40, the decision is presented to the user at 44 which allows him to employ a user override option if required. For instance, the handset may have three buttons, each referring to one of the three available networks. When a network has been selected at 40, the button relating to that network flashes. If the user is happy with that network, then he presses a send button which causes the handset to set up a call on the selected network at 43. The button/s relating to other available network/s are lit up, allowing the user to employ a "user override" option at 42. If the user wants to select an alternative network then he employs the user override option at 42 and presses one of the other buttons at 47. The handset then sets up a call on the "user override" network at 46. If no alternative networks are available, then no other button/s will be lit up and then the "user override" option cannot be used. The call is then automatically set up on the "ANS" network.

If the selected network is the attached network (on which the handset is registered), the communicator initiates call set up immediately. If the selected network is other than the attached network, the communicator attaches to the selected network and initiates call set-up.

Ideally the "worst case delay" from call request to automatic call initiation should not exceed 30 seconds.

### Call Receiving Mode

The behaviour of the handset when attempting to receive a call will now be described. The handset receives incoming (mobile telephone) calls only on the network to which it is currently attached.

The networks associated with base stations 6,7,8 are each attached to the PSTN 10 at one or more points. Also attached to the PSTN 10 is a central server 12, associated with the handset 1 (and also associated with a number of other handsets). The server 12 maintains an awareness of the location of the handset 1 by network only, i.e. it knows which network environment the handset is registered with and directs the control function associated with an intelligent network (IN) to route an incoming call to the handset 1 appropriately.

## Claims

1. A method of operating a wireless communication terminal (10 comprising identifying a preferable one of at least two wireless networks (6,7,8) for establishing an outgoing call on the basis of an algorithm involving at least one parameter (41) related to the networks.

2. A method according to claim 1, further comprising establishing an outgoing call on the identified network.

3. A method according to claim 1, further comprising selecting a network on the basis of the identified network and at least one user defined parameter, and establishing an outgoing call on the selected network.

4. A method according to claim 3, wherein the user defined parameter comprises a network preferred by the user.

5. A method according to any of the preceding claims, wherein the at least one parameter related to the networks comprises the current tariff information (33) for each of the at least two networks.

6. A method according to any of the preceding claims, wherein the algorithm identifies the cheapest available network on the basis of the outgoing call destination, and the current tariff information for each network.

7. A method according to any of the preceding claims, wherein one of the networks comprises a cordless telecommunications network (6).

8. A method according to claim 7, wherein the network comprises the Digital European Cordless Telecommunications network (DECT).

9. A method according to any of the preceding claims, wherein one of the networks (8) comprises the Global System for Mobile communications network (GSM).

10. A method according to any of the preceding claims, wherein one of the networks (7) comprises a Digital Cellular System network.

11. A method according to claim 10, wherein the network comprises DCS 1800.

12. A wireless communication terminal (1) comprising connection means (2) capable of establishing an outgoing call with at least two wireless telephony networks (6,7,8), the terminal further comprising automatic selection means adapted to identify a preferable one of the at least two networks for carrying the outgoing call, the network being identified on the basis of an algorithm involving at least one parameter relating to the networks.

13. A terminal according to claim 12, in combination with a central server (12) connected to the at least two networks and adapted to determine which of the networks the handset is currently attached to, and transmit incoming calls to the handset accordingly.

14. A terminal according to claim 12 or 13, further comprising means (2) in the handset for storing the at least one parameter.

15. A terminal according to any of claims 12 to 14, in combination with a central data store (11) containing data relating to the at least one parameter, the handset (1) being adapted to receive periodical updates from the central data store.

16. A terminal according to claim 15, wherein the central data store contains network tariff information.

17. A terminal according to any of claims 12 to 16, wherein the terminal comprises a handheld telephone handset.

18. A terminal according to any of claims 12 to 17 wherein the wireless network comprises a radio telephony network.

19. A terminal according to any of claims 12 to 16 wherein the wireless network comprises a radio data network.
